# EUROPEAN PATENT APPLICATION

(11) **EP 2 793 344 A1**
(43) Date of publication of application: **22.10.2014**
(21) Application number: 12857188.2
(22) Date of filing: 13.01.2012
(51) Int. Cl.: H02J 3/38, H02J 13/00

(54) **DISPLAY TERMINAL, POWER CONTROL SYSTEM, AND DISPLAY METHOD**

(30) Priority: 14.12.2011 JP 2011273865
(71) Applicant: Kyocera Corporation, Kyoto-shi Kyoto 612-8501 (JP)
(72) Inventor: KIUCHI, Kazuya, Yokohama-shi Kanagawa 224-8502 (JP); SHICHIRI, Kazumasa, Yokohama-shi Kanagawa 224-8502 (JP)
(74) Representative: Schwabe - Sandmair - Marx
(86) International application number: PCT/JP2012/000192
(87) International publication number: WO 2013/088584

(57) **Abstract**

A display terminal 10 displays information about a power controlling state of an energy management apparatus 20 capable of communicating with a power conditioner 40 connected to a power generation system 50 and a power storage system 60, a connection device 30 connected to the power conditioner 40 and a commercial power supply 100, and a loading apparatus 80 for receiving power via the power conditioner 40. The display terminal 10 includes: a display unit 12; an input detection unit 14 for detecting an input corresponding to a display; and a control unit 16, when the input corresponding to the display is detected, for obtaining information about the power controlling state associated with the display from the energy management apparatus 20 and controlling the display unit 12 to display the information in a predetermined display mode.

## Description

### CROSS REFERENCE TO RELATED APPLICATION

This application claims priority to and the benefit of Japanese Patent Application No. 2011-273865 filed on December 14, 2011, the entire contents of which are incorporated herein by reference.

### TECHNICAL FIELD

The present invention relates to a display terminal used for a power control system, the power control system including the display terminal, and a display method of the display terminal.

### BACKGROUND ART

In late years, there has been known a technique of controlling, by using a power management apparatus (for example, HEMS; Home Energy Management System) provided to each consumer, a load and a dispersed power source that are provided to the consumer (for example, see Patent Document 1).

As the dispersed power source, a fuel cell unit comprising a fuel cell such as SOFC (Solid Oxide Fuel Cell) may be considered. Alternatively, as other dispersed power sources, power generation equipments using clean energy such as sunlight, wind, geothermal heat and the like may also be considered. By employing such power generation equipments, a power management system described in the above Patent Document 1 may utilize private power generation and reduces power supplied from a power system (a commercial power supply), thereby reducing cost of purchasing power from the commercial power supply.

Also, there has been suggested a power supply system combining a storage battery in addition to power generation using the fuel cell and power generation using a solar cell, (for example, see Patent Document 2). In using such a power supply system including the power generation apparatuses and the storage battery, management and control of the power by the power management apparatus as described above is of great importance.

### RELATED ART DOCUMENTS

### PATENT DOCUMENTS

Patent Document 1: Japanese Patent Application Laid-Open Publication No. 2003-309928
Patent Document 2: Japanese Patent Application Laid-Open Publication No. 2011-3449

### SUMMARY OF INVENTION

### TECHNICAL PROBLEM

In a conventional power control system, however, it cannot be said that it has been easy for an ordinary user to understand, at a glance, a power control and management state conducted by the power management apparatus such as the HEMS from information shown to a user.

Accordingly, an object of the present invention in consideration of such a problem is to provide a display terminal that displays in such a manner that the user may easily understand a power controlling state of the power control system at a glance, the power control system, and a display method.

### SOLUTION TO PROBLEM

In order to achieve the above object, a display terminal according to a first aspect of the present invention for displaying information about a power controlling state of an energy management apparatus capable of communicating with a power conditioner connected to at least one of a power generation system and a power storage system, a connection device connected to the power conditioner and a commercial power supply, and a loading apparatus for receiving power via the power conditioner, the display terminal includes:
a display unit;
an input detection unit for detecting an input corresponding to a display of the display unit; and
a control unit, when the input detection unit detects the input corresponding to the display of the display unit, for obtaining information about the power controlling state of the energy management apparatus associated with the display from the energy management apparatus and controlling the display unit to display the information about the power controlling state in a predetermined display mode.

Preferably, when an image representing the connection device is displayed on the display unit and, simultaneously, the input detection unit detects an input corresponding to a display of the image representing the connection device,
the control unit obtains, as the information about the power controlling state of the energy management apparatus associated with the image representing the connection device, at least one of information about power purchased from the commercial power supply and power sold to the commercial power supply and information about an electrical charge and controlling the display unit to display the information in the predetermined display mode.

Preferably, the control unit, in displaying a transition of the power controlling state of the energy management apparatus in a chronological order, controls the display unit to display information up until the present time based on a history of the transition of the power controlling state and information after the present time based on a prediction made by the energy management apparatus on the basis of the history or based on a prediction of the transition of the power controlling state obtained from an external server.

Preferably, the control unit, in displaying the transition of the power controlling state of the energy management apparatus in the chronological order, obtains information about the transition of the power controlling state of the energy management apparatus for a predetermined period from the energy management apparatus and controls the display unit to display the information in the predetermined display mode.

Preferably, when the input detection unit, while the transition of the power controlling state of the energy management apparatus is displayed in the chronological order in the display unit, detects an input indicating a shift in a chronological direction corresponding to the display of the transition in the chronological order,
the control unit, based on a shifting direction indicated by the input detected by the input detection unit, obtains information about the transition of the power controlling state of the energy management apparatus from the energy management apparatus and controls the display unit to display the information in the predetermined display mode following the shift of the input detected by the input detection unit.

Preferably, the control unit, in displaying information about power generation by the power generation system as the information about the power controlling state of the energy management apparatus, controls the display unit to display an amount of generated power represented by a rotational speed or a rotational direction of a predetermined object.

Preferably, the control unit, in displaying information about charge or discharge of the power storage system as the information about the power controlling state of the energy management apparatus, controls the display unit to display an animation of a predetermined object that expands outward indicating a discharging state or an animation of the predetermined object that contracts inward indicating a charging state.

Preferably, when the input detection unit, while the display unit displays an image representing the loading apparatus, detects an input corresponding to a display of the image representing the loading apparatus,
the control unit obtains information about the power controlling state of the energy management apparatus associated with the image representing the loading apparatus from the energy management apparatus and controls the display unit to display the information about the power controlling state in the predetermined display mode.

Preferably, the control unit obtains, as the information about the power controlling state of the energy management apparatus, information about a demand response for power supplied from the commercial power supply or information about a purchasing price of the power from the energy management apparatus and controls the display unit to display the information about the power controlling state in the predetermined display mode.

Preferably, when the power controlling state of the energy management apparatus is changed based on the information about the demand response for the power supplied from the commercial power supply,
the control unit obtains information about a state after the change of the power controlling state of the energy management apparatus from the energy management apparatus and controls the display unit to display the information about the state in the predetermined display mode.

Preferably, when the power controlling state of the energy management apparatus is changed to a state selling the power generated by the power generation system to the commercial power supply based on information, as the information about the demand response, that the power supply from the commercial power supply is in an emergency state,
the control unit obtains information about a state after the change of the power controlling state of the energy management apparatus from the energy management apparatus and controls the display unit to display the information about the state in the predetermined display mode.

Preferably, when the power controlling state of the energy management apparatus is changed to a self-supporting operation by using at least one of power from the power generation system and power from the power storage system based on information, as the information about the demand response, that instructs the self-supporting operation by using at least one of the power from the power generation system and the power from the power storage system,
the control unit obtains information about a state after the change of the power controlling state of the energy management apparatus from the energy management apparatus and controls the display unit to display the information about the state in the predetermined display mode.

Also, in order to achieve the above object, a power control system according to a second aspect of the present invention including a power conditioner connected to at least one of a power generation system and a power storage system and connected also to a loading apparatus, a connection device connected to the power conditioner and a commercial power supply, an energy management apparatus capable of communicating with the power conditioner, the connection device and the loading apparatus, and a display terminal for communicating with the energy management apparatus, wherein
the display terminal includes:
a display unit for displaying information about a power controlling state of the energy management apparatus;
an input detection unit for detecting an input corresponding to a display of the display unit; and
a control unit, when the input detection unit detects the input corresponding to the display of the display unit, for obtaining information about the power controlling state of the energy management apparatus associated with the display from the energy management apparatus and controlling the display unit to display the information about the power controlling state in a predetermined display mode.

Further, in order to achieve the above object, a display method of a display terminal according to a third aspect of the present invention including a display unit, for communicating with an energy management apparatus capable of communicating with a power conditioner connected to at least one of a power generation system and a power storage system, a connection device connected to the power conditioner and a commercial power supply, and a loading apparatus for receiving power via the power conditioner, the display method includes:
a display step of displaying information about a power controlling state of the energy management apparatus on the display unit;
an input detection step of detecting an input corresponding to a display of the display unit; and
a control step of, when the input corresponding to the display of the display unit is detected at the input detection step, obtaining information about the power controlling state of the energy management apparatus associated with the display from the energy management apparatus and controlling the display unit to display the information about the power controlling state in a predetermined display mode.

### EFFECT OF THE INVENTION

According to the present invention, the display terminal that displays the power controlling state of the power control system in such a manner that the user may easily understand the power controlling state at a glance, a power control system, and a display method may be provided.

### BRIEF DESCRIPTION OF DRAWINGS

FIG. 1 is a diagram illustrating a schematic configuration of a power control system according to an embodiment of the present invention;
FIG. 2 is a diagram illustrating a schematic configuration of a display terminal according to the embodiment of the present invention;
FIG. 3 is a flowchart illustrating an operation of the display terminal according to the embodiment of the present invention;
FIGS. 4A and 4B are diagrams illustrating an example of a display of the display terminal according to the embodiment of the present invention;
FIG. 5 is a diagram illustrating an example of the display of the display terminal according to the embodiment of the present invention;
FIG. 6 is a diagram illustrating an example of the display of the display terminal according to the embodiment of the present invention;
FIG. 7 is a diagram illustrating an example of the display of the display terminal according to the embodiment of the present invention;
FIG. 8 is a diagram illustrating an example of the display of the display terminal according to the embodiment of the present invention;
FIG. 9 is a diagram illustrating an example of the display of the display terminal according to the embodiment of the present invention;
FIG. 10 is a diagram illustrating an example of the display of the display terminal according to the embodiment of the present invention;
FIGS. 11A and 11B are diagrams illustrating an example of the display of the display terminal according to the embodiment of the present invention;
FIG. 12 is a diagram illustrating an example of the display of the display terminal according to the embodiment of the present invention;
FIG. 13 is a diagram illustrating an example of the display of the display terminal according to the embodiment of the present invention;
FIG. 14 is a diagram illustrating an example of the display of the display terminal according to the embodiment of the present invention;
FIG. 15 is a diagram illustrating an example of the display of the display terminal according to the embodiment of the present invention; and
FIGS. 16A and 16B are diagrams illustrating an example of the display of the display terminal according to the embodiment of the present invention.

### DESCRIPTION OF EMBODIMENT

Hereinafter, an embodiment of the present invention will be described with reference to the accompanying drawings.

First, a power control system according to the present embodiment will be described. The power control system according to the present embodiment preferably includes, in addition to power supplied from a power system (a commercial power supply), at least one of a power supply system using, for example, a solar power generation and a storage battery system capable of charging/discharging the power. Note that the power supply system is not limited to a solar power generation system but may be a variety of types of power generation systems including, for example, a fuel cell system including a fuel cell such as SOFC. The present embodiment described hereafter uses an example that includes the solar power generation system as the power generation system and, further, a power storage unit as a power storage system.

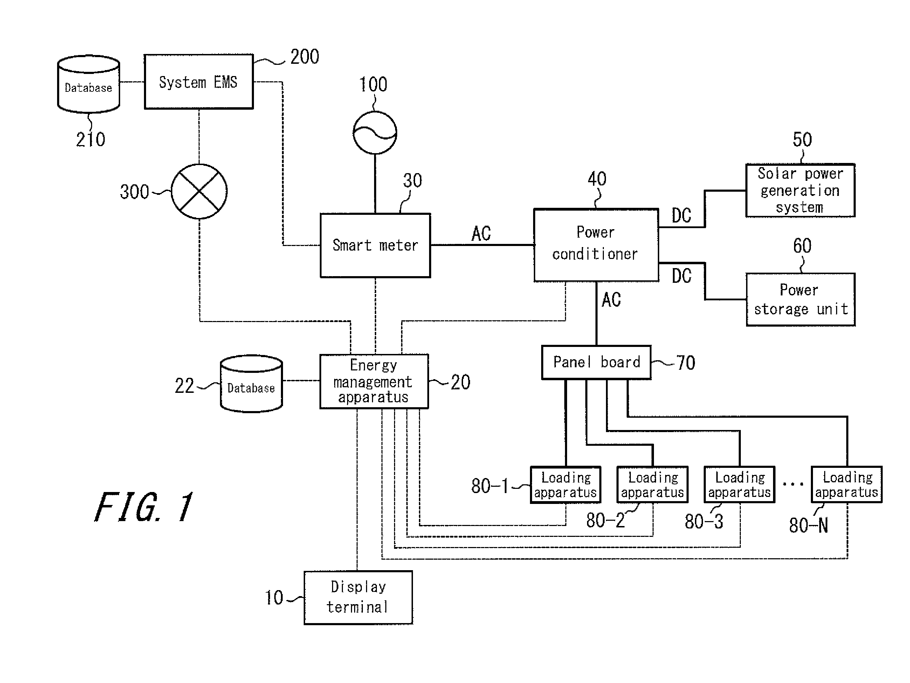

FIG. 1 is a functional block diagram illustrating a schematic configuration of the power control system according to the present embodiment. As illustrated in FIG. 1, the power control system according to the present embodiment includes a display terminal 10, an energy management apparatus 20, a smart meter 30, a power conditioner 40, a solar power generation system 50, and a power storage unit 60. In FIG. 1, solid lines connecting functional blocks represent power flow. Also, broken lines connecting the functional blocks represent flow of a control signal or transmitted information, in a wired or wireless manner.

The power control system illustrated in FIG. 1 may supply, in addition to power supplied from a commercial power supply 100, power generated by the solar power generation system 50 and discharged power out of charged power in the power storage unit 60. In FIG. 1, although a loading apparatus 80-1, a loading apparatus 80-2, a loading apparatus 80-3, and a loading apparatus 80-N are connected to the power control system, any number of loading apparatuses may be connected. These loading apparatuses may be, for example, a variety of electric appliances such as a TV set, an air conditioner, a refrigerator and the like. These loading apparatuses, as illustrated in FIG. 1, are connected to the power conditioner 40 via a panel board 70 so as to receive the power.

The display terminal 10 displays a power controlling state of the energy management apparatus 20 on a display unit such that an ordinary user may easily understand the power controlling state. The display terminal 10 is connected to the energy management apparatus 20 in a wired or wireless manner and thus may communicate therewith. A configuration of the display terminal 10 will be described in detail later.

The energy management apparatus 20 may be constituted by using, for example, HEMS and controls and manages the power in the power control system illustrated in FIG. 1. In particular, for example, the energy management apparatus 20 is connected to the loading apparatuses 80-1 to 80-N in the wired or wireless manner and controls power consumption thereof. In order to wirelessly connect the energy management apparatus 20 with the loading apparatuses 80-1 to 80-N, various methods such as an infrared communication, a power line communication (PLC; Power Line Communication) and the like may be employed.

Also, the energy management apparatus 20 is connected to the power conditioner 40 in the wired or wireless manner and monitors the power supplied from the solar power generation system 50, the power storage unit 60, and the commercial power supply 100 to the loading apparatuses 80 via the panel board 70. The energy management apparatus 20 also monitors the power stored in the power storage unit 60 via the power conditioner 40. Further, the energy management apparatus 20 is connected to the smart meter 30 in the wired or wireless manner and thus capable of receiving information about a demand response (Demand Response: DR) from a power company and the like, for example.

Further, the energy management apparatus 20 supplies information about a control and management state of the power in the power control system to the display terminal 10. The energy management apparatus 20, as illustrated in FIG. 1, includes a database 22 for storing various collected information. The database 22 may be constituted by using any memory device and the like, and either externally connected to the energy management apparatus 20 or incorporated therein. Further, the energy management apparatus 20 may connect to a network 300 in the wired or wireless manner.

The smart meter 30 is connected to the commercial power supply 100 and measures the power supplied therefrom. The smart meter 30 is also connected to the power conditioner 40 and measures the power generated by the solar power generation system 50 and sold to the power company. The smart meter 30 may inform the energy management apparatus 20 of information about results of the measurements. When the smart meter 30 communicates with the energy management apparatus 20 as described above, a short-range communication method such as ZigBee (ZigBee) may be employed.

Further, the smart meter 30, as illustrated in FIG. 1, is connected to a system EMS (Energy Management System) 200 in the wired or wireless manner and thus capable of receiving information such as predictions about the power. Here, the system EMS 200 is a facility for carrying out various predictions and controls associated with the power and is generally installed in the power company and the like. The system EMS may be constituted by using, for example, MDMS (a meter data management system). The system EMS 200 includes a database 210 for storing various information associated with a variety of power and may collect and store the information about the results of the measurements by the smart meter 30. Also, the system EMS 200 may connect to the network 300. According to the present embodiment, the smart meter 30 constitutes a connection device according to the present invention.

The power conditioner 40 converts DC power supplied from the solar power generation system 50 and the power storage unit 60 into AC power. The AC power obtained through the conversion by the power conditioner 40 is supplied, via the panel board 70, to each of the loading apparatuses 80. When there is surplus power generated by the solar power generation system, the AC power obtained through the conversion by the power conditioner 40 may be sold to the power company. Also, the power conditioner 40 may convert the AC power supplied from the commercial power supply 100 into DC power to be stored in the power storage unit 60.

The solar power generation system 50 generates the power by using the sunlight. To that end, the solar power generation system 50 includes a solar cell and converts solar energy into the DC power. According to the present embodiment, the solar power generation system 50 is assumed to have a solar panel installed on a roof of a house and the like and generate the power from the sunlight. According to the present invention, however, the solar power generation system 50 may take anything so far as being capable of converting the solar energy into the power. The power generated by the solar power generation system 50, as described above, is converted into the AC power by the power conditioner 40 and then supplied to each of the loading apparatuses 80, or sold to the power company. Alternatively, the power generated by the solar power generation system 50 may be stored in the power storage unit 60, or supplied to the loading apparatuses 80 without being converted into the AC power.

The power storage unit 60 includes a storage battery and may supply power by discharging the power stored in the storage battery. Also, the power storage unit 60 may store the power supplied from the commercial power supply 100 and the power supplied from the solar power generation system 50. As illustrated in FIG. 1, the power discharged from the power storage unit 60 may also be supplied to each of the loading apparatuses 80.

The panel board 70 distributes the supplied power to each of the loading apparatuses (80-1, 80-2, 80-3, and 80-N).

Next, the display terminal 10 according to the present embodiment will be further described.

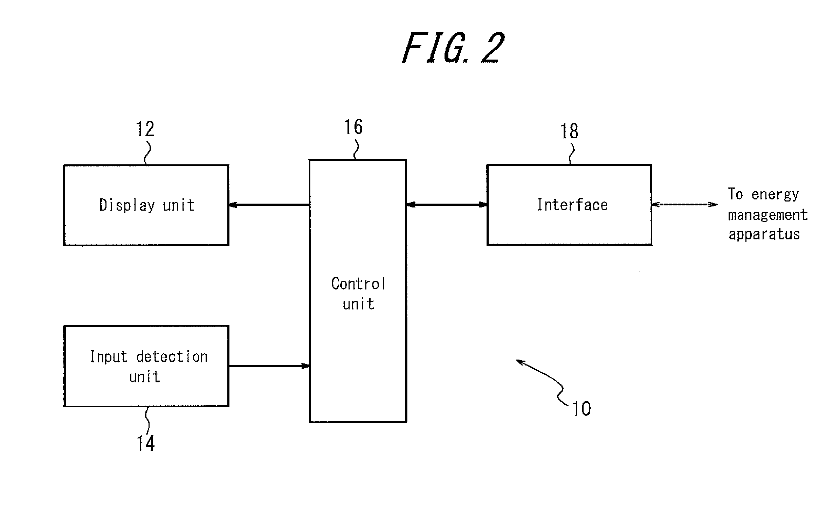

FIG. 2 is a functional block diagram illustrating a schematic configuration of the display terminal according to the present embodiment. As illustrated in FIG. 2, the display terminal 10 according to the present embodiment includes a display unit 12, an input detection unit 14, a control unit 16, and an interface 18. The display terminal 10 may be constituted by using a specially designed terminal, or a variety of terminals such as a personal computer (PC), a laptop computer, and a tablet PC having application software installed therein.

The display unit 12 displays information about the power controlling state of the energy management apparatus 20. The display unit 12 may be constituted by using, for example, a liquid crystal display (LCD), an organic EL display, or other display devices. The display unit 12 displays characters, numbers, and symbols, as well as various icons depicting objects. According to the present embodiment, although the display unit 12 may display a monochromatic display or a grayscale display, in order to display in such a manner that the ordinary user may easily understand contents of the display at a glance, the display unit 12 preferably corresponds to a color display.

The input detection unit 14 detects an input corresponding to the display of the display unit 12. The input detection unit 14 may be constituted by using a variety of input devices such as a dedicated controller, a keyboard, a mouse and the like. According to the present embodiment, when such an input device is employed, the input detection unit 14 may detect a user operation to move a cursor or a pointer to the icon depicting the object displayed in the display unit 12. Also, the input detection unit 14 may detect an input corresponding to the display of the object, i.e., a user input selecting the object and the like.

Alternatively, the input detection unit 14 may be constituted by using a touch panel for detecting an operation by a user's finger and the like to directly touch the touch panel. In particular, when such a touch panel constituted by using a light-permeable material is disposed on top of a front surface of the display unit 12, a user operation to directly touch the icon depicting the object displayed in the display unit 12 may be detected. Accordingly, the input detection unit 14 constituted by using the touch panel formed as described above may provide an intuitive operability to the user. Hereinafter, the present embodiment will be described assuming an example where the input detection unit 14 constituted by using a transparent touch panel is disposed in front of the display unit 12.

The control unit 16 controls each functional unit constituting the display terminal 10, thereby controlling and managing the entire display terminal 10. Controls conducted by the control unit 16 specific to the present embodiment will be described later.

The interface 18, when the display terminal 10 communicates with the energy management apparatus 20 in the wired manner, may function as a receptacle of a connector for connecting a cable connected to the energy management apparatus 20 with the display terminal 10. On the other hand, the interface 18, when the display terminal 10 communicates with the energy management apparatus 20 in the wireless manner, may function as a wireless unit constituting a transmission and reception unit for exchanging a signal with the energy management apparatus 20. In these cases, the energy management apparatus 20 also includes an interface unit corresponding to the interface unit 18 of the display terminal 10.

Next, an operation carried out by the display terminal 10 according to the present embodiment will be described.

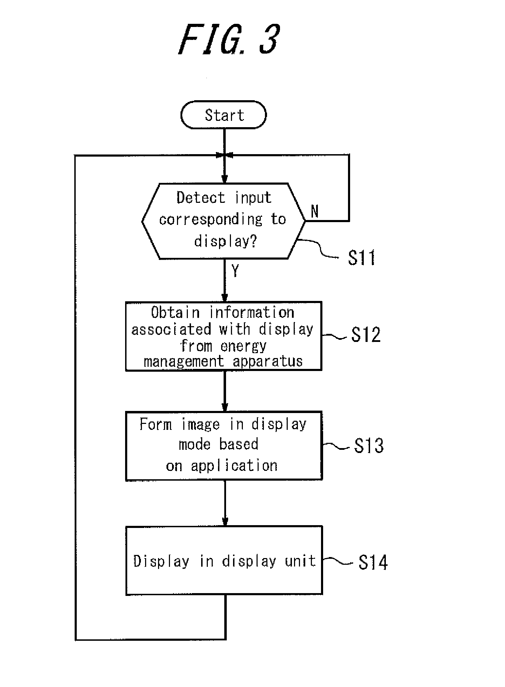

FIG. 3 is a flowchart illustrating the operation carried out by the display terminal 10 according to the present embodiment. In starting the operation illustrated in FIG. 3, the control unit 16 controls the display unit 12 to preliminarily display prescribed icons depicting the objects and the like.

When the operation illustrated in FIG. 3 starts, the control unit 16 controls such that the input detection unit 14 may detect an input to touch the icon depicting the object or a displayed graph, an input to touch and sweep (drag) the displayed graph, and an input to touch and flick the displayed graph (step S11). When the input corresponding to the icon depicting the object is detected at step S11, the control unit 16 controls to obtain, from the energy management apparatus 20, information associated with the icon depicting the object, or data associated with a new display area corresponding to a change in a display area of the graph based on the sweeping or the dragging (step S12). At step S 12, the control unit 16 may control to obtain these information from the database 22 and the like storing information about the energy management apparatus 20.

At step S 12, when the information associated with the icon depicting the object and the data of the area for drawing a new graph and the like are obtained, the control unit 16 controls such that an image is formed in a predetermined display mode based on the application software (step S13). The application software used at step S13 is preliminarily installed in the control unit 16. When the information associated with the icon depicting the object and the change in the display area is formed, the control unit 16 controls the display unit 12 to display the information thus formed (step S 14).

According to the present embodiment, as described above, when the input detection unit 14 detects the input corresponding to the display in the display unit 12, the control unit 16 obtains information about the power controlling state of the energy management apparatus 20 associated with the display from the energy management apparatus 20. Then, the control unit 16 controls the display unit 12 to display the information about the power controlling state in the predetermined display mode based on the application software.

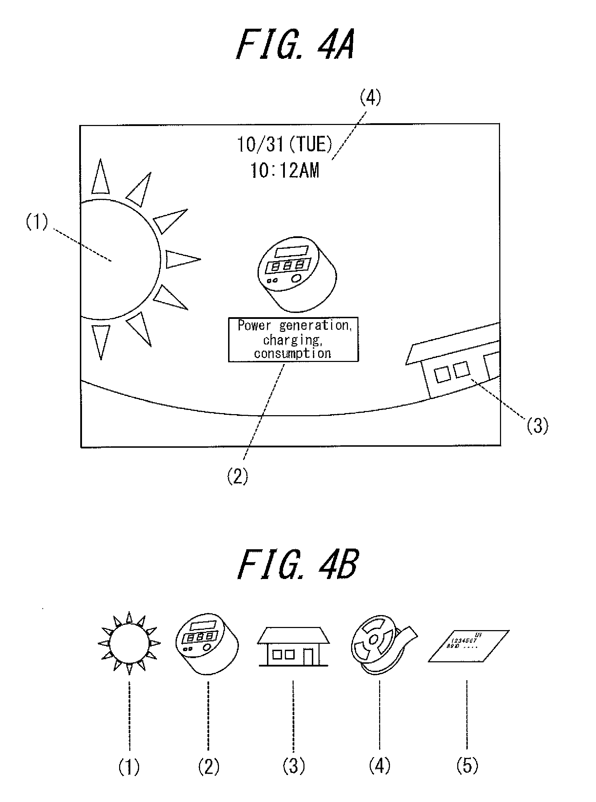

Next, specific examples of the display by the display terminal 10 according to the present embodiment will be described. FIG. 4 to FIG. 16 illustrate specific examples of GUI (Graphical User Interface) displayed in the display unit 12 of the display terminal 10. Hereinafter, panels displayed in the display unit 12 of the display terminal 10 will be described, unless otherwise specified. Also, the examples described below assume a condition where the power control system illustrated in FIG. 1 is installed in a general household. In the examples described below, a variety of image data such as objects constituting each display are included in the application software described above installed in the control unit 16.

FIG. 4A is a diagram illustrating an example where a main panel for displaying the information about the power controlling state of the energy management apparatus 20 is displayed in the display unit 12 of the display terminal 10. As described above, in the following examples the input detection unit 14 for detecting the input corresponding to the display of the display unit 12 is disposed in front of the display unit 12 and may detect an input of a touch operation with the user's finger or the like to an object displayed in the display unit 12.

As illustrated in FIG. 4A, when the energy management apparatus 20 carries out a normal power control, the icon depicting the object related to each item is displayed, as the main panel, in the display unit 12 of the display terminal 10. In an example illustrated in FIG. 4A, the display unit 12 displays icons depicting the sun (1), the smart meter (2), and a house (3). As illustrated in FIG. 4A, also, date and time (4), for example, may be displayed as useful information for the user.

FIG. 4A illustrates the example where the above objects (1) to (3) are displayed as the icons depicting the objects that allow for detection of the user operation thereto. Upon detection of an input operation of the user to sweep one of the icons, the control unit 16 of the display terminal 10 controls such that other icons being displayed also move in a following manner. That is, upon detection of an input operation of the user to sweep the icon (2) depicting the smart meter from the right to the left, the control unit 16 controls such that the other icons (1) and (3) also move from the right to the left in the following manner. By such an operation, for example, the icon (1) moves outside the display unit 12 and the icon (3) moves to a center of the display unit 12. In this case, the control unit 16 controls the display unit 12 such that an icon next to the icon (3) is displayed at a right-side end of the display unit 12.

As described above, the display terminal 10, based on the detection of the input operation of the user to touch and sweep the icon, may display the icons in succession in a predetermined order. The icons to be displayed in succession in the predetermined order may take an order as illustrated in FIG. 4B, for example. An icon (4) illustrated in FIG. 4B depicts a reel of a magnetic tape for data recording. Also, an icon (5) illustrated in FIG. 4B depicts a calendar. According to the present embodiment, the control unit 16 may control such that the icons illustrated in FIG. 4B loop on the display unit 12. For example, when the icons illustrated in FIG. 4B are displayed in succession in the display unit 12 as illustrated in FIG. 4A, the icon (1) may be displayed following the icon (5). Also, when the icon being displayed is swept from the left to the right, the icon (5) may be displayed following the icon (1).

As illustrated in FIG. 4A, in the vicinity of the icon displayed at the center of the panel in the display unit 12, an indication of a type of information to be displayed based on an input to the icon may be displayed. In FIG. 4A, for example, the icon (2) depicting the smart meter is displayed at the center of the panel in the display unit 12, with an indication therebelowthat information about "Power generation, Charging, Consumption" will be displayed upon selection of this icon.

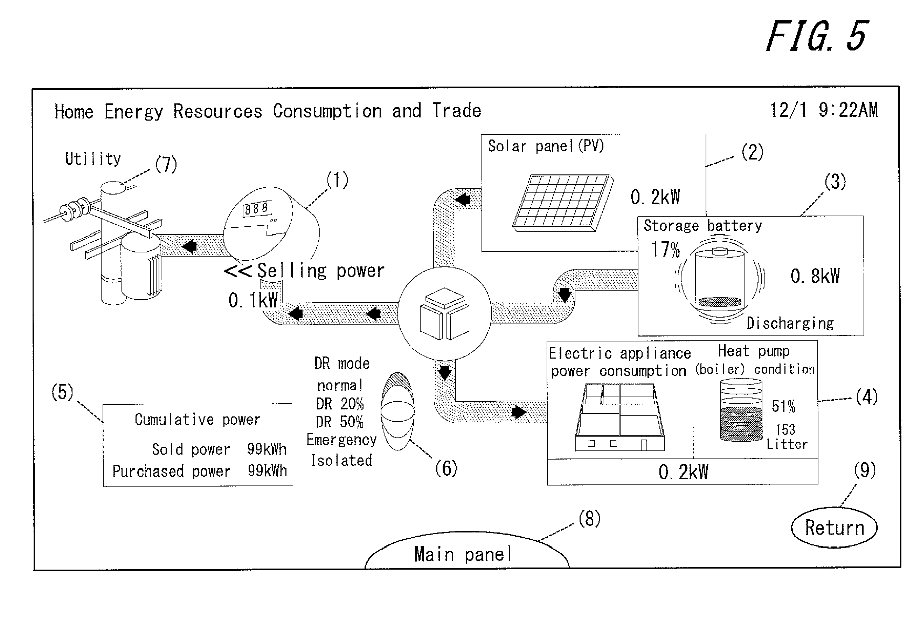

When the input detection unit 14, in the display as illustrated in FIG. 4A, detects an input operation corresponding to the display of the icon (2) depicting the connection device (for example, the smart meter) connected between the power conditioner 40 and the commercial power supply 100, the control unit 16 obtains information about the smart meter from the energy management apparatus 20 and controls the display unit 12 to display the information. That is, for example, when the use's finger or the like touches the icon (2) depicting the smart meter illustrated in FIG 4A, the display unit 12, as illustrated in FIG. 5, displays the information about the "Power generation, Charging, Consumption" associated with the smart meter. Also, when the user's finger or the like touches an object of the "Power generation, Charging, Consumption" illustrated in FIG. 4A, the display unit 12 may display as illustrated in FIG. 5.

FIG. 5 is a diagram illustrating, as an example of the display of the display unit 12 of the display terminal 10, a display of the information about the "Power generation, Charging, Consumption" associated with the smart meter.

As illustrated in FIG. 5, the display unit 12 displays an icon (1) depicting the smart meter (connection device), an icon (2) depicting power generation by a solar panel, an icon (3) depicting charge/discharge of the storage battery, and an icon (4) depicting power consumption by the electric appliances in the household and a state of a heat pump. The display unit 12 also displays an icon (5) showing a state of cumulative power, an icon (6) showing a state of a DR mode, and an icon (7) depicting the power system. The display unit 12 further displays an icon (8) depicting a button for shifting to the main panel, and an icon (9) depicting a return button. An icon illustrated at the center of FIG. 5 exchanging the power with the icons (1), (2), (3), and (4) depicts the power conditioner 40.

The following is a further detailed description of each icon illustrated in FIG. 5.

The icon (1) depicting the smart meter, in FIG. 5, indicates that, out of the power generated by the power control system (the solar power generation system 50, in particular), power of 0.1 kW is being sold to the commercial power supply. For the display of the information about the "Power generation, Charging, Consumption" illustrated in FIG. 5, objects such as arrows preferably move indicating the power flow. As illustrated in FIG. 5, for example, when the power control system is selling the power to the commercial power supply, thick arrows may move toward the icon (1) depicting the smart meter, and from the icon (1) depicting the smart meter to the icon (7) depicting the commercial power supply. Such a display using the arrows allows the user to easily understand a state of the power flow at a glance. On the other hand, when the power control system is buying the power from the commercial power supply, a direction and a movement of these arrows are preferably reversed.

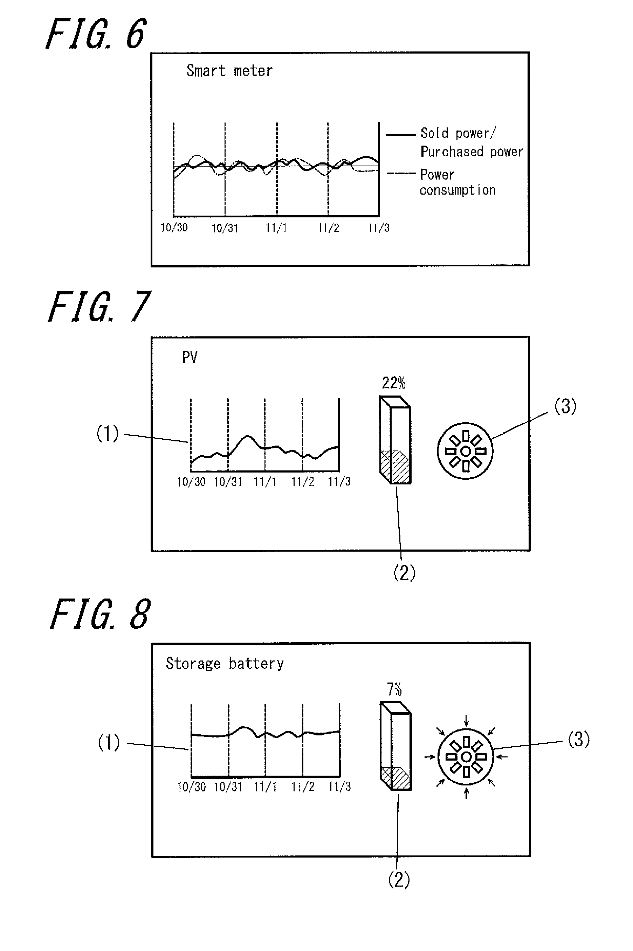

In FIG. 5, upon detection of an input operation by the user to select the icon (1) depicting the smart meter, the control unit 16 obtains information through communication with the energy management apparatus 20 and controls the display unit 12 to display detailed information associated with the smart meter as illustrated in FIG. 6, for example. That is, when the user's finger or the like touches the icon (1) depicting the smart meter illustrated in FIG. 5, the display unit 12, as illustrated in FIG. 6, displays history information as the detailed information associated with the smart meter.

FIG. 6 illustrates an example displaying, as the detailed information associated with the smart meter, history information about power purchased from the commercial power supply and power sold thereto, and history information about power consumption by the loading apparatuses 80-1 to 80-N connected to the power control system. Preferably, a graph showing the history information illustrated in FIG. 6, upon detection of an input operation by the user to sweep the graph or the like, shifts each axis of the graph so as to, for example, display older history information. Also preferably, in the graph showing the history information illustrated in FIG. 6, upon detection of an input operation by the user to touch the graph with two fingers and move touch positions by bringing the fingers close to each other or away from each other (by pinching-in or pinching-out), a scale of each axis is changed.

As illustrated in FIG. 6, in particular, when a transition of the power controlling state of the energy management apparatus 20 is displayed in a chronological order, a default display may include a time axis (horizontal axis) with a scale representing, for example, a day (24 hours), a month (30 days, for example), or a year (12 months). For example, when it is 12th of March today, a transition during one month including today, i.e., from 1 st of March to 31 st of March may be displayed in the chronological order. When the display includes, for example, the first day and the last day of a month as a unit as described above, upon detection of the input operation by the user to touch and sweep the graph, the display preferably shows a previous month or a next month in response to such a sweeping input operation.

On the other hand, for some power companies, a one-month meter reading period for calculation of the electrical charge may not necessarily start on the first day of a month and end the last day of the month. As such, in displaying the power controlling state of the energy management apparatus 20 in the chronological order, information about a transition of the power controlling state of the energy management apparatus during a predetermined period from a predetermined starting date to a predetermined ending date may be displayed as the default display. Such a predetermined period from the predetermined starting date to the predetermined ending date may be preset, or the user may be prompted to set the predetermined period for the default display. In order to display as described above, the control unit 16 controls to obtain, from the energy management apparatus 20, the information about the transition of the power controlling state of the energy management apparatus 20 during the predetermined period from the predetermined starting date to the predetermined ending date that are preset. In this way, the user may easily understand, on a single panel, the transition of the power controlling state of the energy management apparatus 20 during any period of time such as the meter reading period for the power company for the calculation of the electrical charge.

When the information about the transition of the power controlling state of the energy management apparatus 20 during the predetermined period is displayed, the control unit 16, upon detection of, for example, a double-tapping input to the input detection unit 14, may control to store the predetermined period for the default display. In this way, when the user wishes to once again display the information about the transition of the power controlling state of the energy management apparatus 20 during the predetermined period, the user may save time as there is no need for setting the predetermined period.

Also, for example, when displaying the information about the transition of the power controlling state of the energy management apparatus 20 for one month as the predetermined period from the first day of the month to the last day of the month, it is not easy for the user to immediately understand continuity from the end of a current month to a beginning of a next month and continuity from an end of a previous month to a beginning of the current month. According to the present embodiment, therefore, also after displaying the graph of one month from the first day of the month to the end of the month, for example, as the predetermined period, the control unit 16 may detect an input to the input detection unit 14. In this condition, upon detection of an input operation by the user to touch the graph of the display and sweep (drag) into a direction of the time axis, the control unit 16 changes the display by shifting the display by an amount of the sweeping operation. That is, when the input detection unit 14, while the transition of the power controlling state of the energy management apparatus 20 is displayed in the chronological order, detects an input moving in the chronological direction corresponding to the display, the control unit 16 controls the display unit 12 to display following the movement of the input detected by the input detection unit 14.

In order to display as described above, the control unit 16, based on the chronological direction in which the input detected by the input detection unit 14 moves, controls to obtain the information about the transition of the power controlling state of the energy management apparatus 20 from the energy management apparatus 20. For example, when the display of the transition of the power controlling state of the energy management apparatus 20 is shifted due to an input detected by the input detection unit 14 such that a previous transition is displayed, information about the previous transition is obtained from the energy management apparatus 20. Similarly, for example, when the display of the transition of the power controlling state of the energy management apparatus 20 is shifted due to an input detected by the input detection unit 14 such that a later transition is displayed, information about the later transition is obtained from the energy management apparatus 20. In this way, upon detection of the input operation by the user to drag the display of the transition of the power controlling state of the energy management apparatus 20, the continuity from the end (31 st) of October to the beginning (1st) of November as illustrated in FIG 6, for example, may be displayed in a single panel, allowing for easy understanding.

According to the present embodiment, as described above, upon detection of the input operation by the user to drag the display of the display unit 12 and the like, the display may be shifted by a unit such as one month period, or by a finer unit within the period. In order to distinguish these two operations, upon detection of, for example, an input operation by the user to flick the display of the display unit 12, i.e., a flicking input operation, the display may be shifted by the predetermined period such as one month as a unit. In this case, upon detection of an input operation by the user to slowly drag the display of the display unit 12, i.e., a normal drag operation, a breakdown of the predetermined period such as one month may be finely and gradually shifted in response to the drag operation.

According to the present embodiment, other graphs described below may display in a manner similar to that described above.

The icon (2) depicting the power generation by the solar panel illustrated in FIG. 5 indicates that the solar power generation system 50 currently generates power of 0.2 kW. In FIG. 5, upon detection of an input operation by the user to select the icon (2) depicting the solar panel, the control unit 16 obtains information through the communication with the energy management apparatus 20 and controls the display unit 12 to display detailed information associated with the power generation by the solar panel as illustrated in FIG. 7, for example. That is, when the user's finger or the like touches the icon (2) depicting the solar panel, the display unit 12, as illustrated in FIG. 7, displays history information and the like as the detailed information associated with the power generation by the solar panel.

FIG. 7 illustrates an example displaying, as the detailed information associated with the power generation by the solar panel, the history information (1) of the power generation by the solar power generation system 50, as well as objects (2) and (3) visually indicating current power generation states. Preferably, a graph showing the history information (1) of the power generation by the solar power generation system 50, based on input operations similar to those to the graph described with reference to FIG. 6, carries out corresponding operations.

The object (2) illustrated in FIG. 7 is a bar graph showing a percentage of the power currently generated by the solar power generation system 50 relative to maximum generated power (or a rated output). For example, FIG. 7 shows that the power currently generated by the solar power generation system 50 is 22% out of 100%.

Also, the object (3) illustrated in FIG. 7 visually indicates a current power generation state of the solar power generation system 50. For example, based on a value used as a source of the object (2) illustrated in FIG. 7 (for example, 22% in the example of FIG. 7), a rotation speed of the object (3) illustrated in FIG. 7, which has a wheel-like shape, may change for an animation effect. That is, as the power generated by the solar power generation system 50 increases, the rotation speed of the object (3) illustrated in FIG. 7 also increases. On the other hand, as the power generated by the solar power generation system 50 decreases, the rotation speed of the object (3) illustrated in FIG. 7 also decreases. When no power is generated, the object stops rotating.

The icon (3) depicting charge/discharge of the storage battery illustrated in FIG. 5 indicates that power of 0.8 kW is currently stored in the storage unit 60. In FIG. 5, upon detection of an input operation by the user to select the icon (3) depicting the storage battery, the control unit 16 obtains information through the communication with the energy management apparatus 20 and controls the display unit 12 to display detailed information associated with the charge/discharge of the storage battery as illustrated in FIG. 8, for example. That is, when the user's finger or the like touches the icon (3) depicting the storage battery, the display unit 12, as illustrated in FIG. 8, illustrates history information as the detailed information associated with the charge/discharge of the storage battery.

FIG 8 illustrates an example displaying, as the detailed information associated with charge/discharge of the storage battery, history information (1) about charge/discharge of the storage battery 60, as well as objects (2) and (3) visually indicating current charging/discharging states. Preferably, a graph showing the history information (1) about charge/discharge of the storage battery 60, based on the input operations similar to those to the graph described with reference to FIG. 6, carries out corresponding operations.

The object (2) illustrated in FIG. 8 is a bar graph showing a percentage of the power currently stored in the storage unit 60 relative to maximum stored power. For example, FIG. 7 shows that the power currently stored (i.e., a remaining amount) in the storage unit 60 is 7% out of 100%.

Also, the object (3) illustrated in FIG. 8 visually indicates a current charging/discharging state of the storage unit 60. For example, based on a value of power currently stored in or discharged from the storage unit 60, a rotation direction and a rotation speed of the object (3) illustrated in FIG. 8, which has the wheel-like shape, may change for the animation effect. That is, the object rotates clockwise when the storage unit 60 is charging, and the objects rotates counterclockwise when the storage unit 60 is discharging. Further, as the power stored in or discharged from the storage unit 60 increases, the rotation speed of the object (3) illustrated in FIG. 8 also increases. On the other hand, as the power stored in or discharged from the storage unit 60 decreases, the rotation speed of the object (3) in FIG. 8 also decreases. When there is no charging/discharging, the rotation stops.

Further, the object (3) illustrated in FIG. 8, at a periphery thereof, visually indicates whether the storage unit 60 is currently charging or discharging. That is, at the periphery of the object (3) illustrated in FIG. 8 that is rotating as described above, an animation of a predetermined pattern (another object) that expands or contracts is displayed. For example, an animation of the predetermined pattern to expand outward indicates that the storage battery 60 is in a discharging state, and an animation of the predetermined pattern to contract inward indicates that the storage battery 60 is in a charging state. The object (3) illustrated in FIG. 8 shows, as an example, the pattern to contract inward at the periphery of the rotating object, thereby indicating that the storage unit 60 is in the charging state.

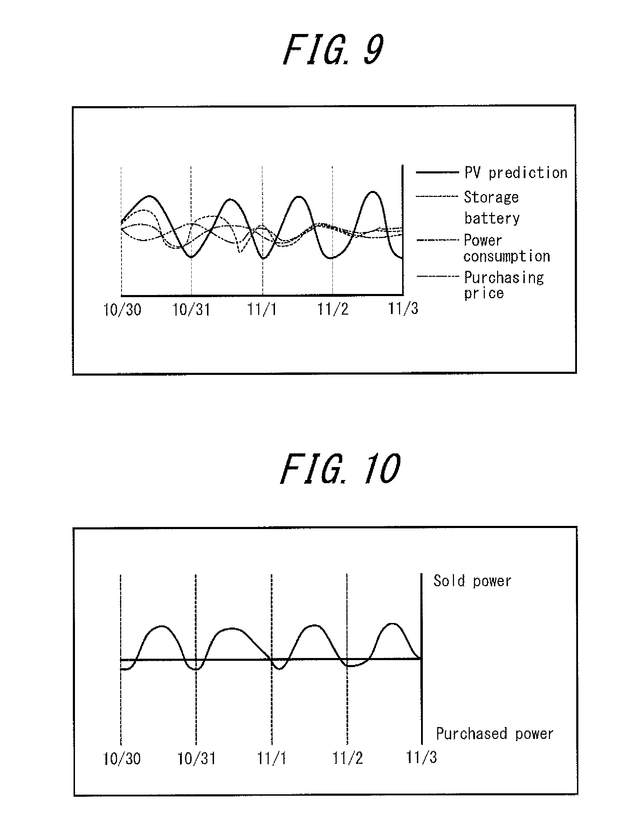

The icon (4) depicting the power consumption by the electric appliances and the state of the heat pump illustrated in FIG. 5 shows that an amount of hot water of the heat pump is 153 liters which corresponds to 51 % of a hot water capacity of the entire heat pump. The icon (4) also shows that power consumption by the loading apparatuses 80-1 to 80-N connected to the power control system is currently at 0.2 kW. In FIG. 5, upon detection of an input operation by the user to select the icon (4), the control unit 16 obtains information through the communication with the energy management apparatus 20 and controls to display detailed information associated with the power consumption by the electric appliances and the state of the heat pump as illustrated in FIG. 9, for example. That is, when the user's finger or the like touches the icon (4) depicting the electric appliances and the heat pump illustrated in FIG. 5, the display unit 12, as illustrated in FIG. 9, displays history information and the like as the detailed information associated with the power consumption by the electric appliances.

FIG 9 illustrates an example displaying, as the detailed information associated with the power consumption by the electric appliances, history information of the power consumption by the loading apparatuses 80-1 to 80-N and various information associated with the power consumption. Preferably, a graph showing the history information of the power consumption by the loading apparatuses 80-1 to 80-N and the like, based on input operations similar to those to the graph described with reference to FIG. 6, carries out corresponding operations.

The graph illustrated in FIG. 9 shows, as examples of the various information associated with the power consumption, a transition of predicated solar power generation (PV prediction) by the solar power generation system 50, a transition of charge/discharge of the storage unit 60, and a transition of a purchasing price of the power purchased from the commercial power supply. Here, as the transition of the PV prediction, when prediction information associated with the solar power generation may be retrieved from an external server such as the system EMS 200 or the like illustrated in FIG. 1, for example, prediction of power which the solar power generation system 50 may generate is displayed, preferably based on the prediction information. As the predication information associated with the solar power generation that may be retrieved from the external server as described above, information service currently provided from a professional vendor may be used. Or, the transition of the PV prediction may be predicted by the energy management apparatus 20 based on a past transition (history) stored in the database 22. Further, as the past transition (history) of the PV prediction, information based on actual power generation by the solar power generation system 50 may be displayed.

In FIG. 9, the purchasing price of the power from the commercial power supply may vary in real time like real-time pricing (RTP), for example, typically reflecting an hourly change in a wholesale electricity market price.

As described above, in displaying the graph of the information showing the chronological change in the power control state of the electric management unit 20, information up to the current time may be displayed based on the history of the chronological change in the power controlling state of the energy management apparatus 20. As the information after the current time, the prediction based on the history of the chronological change in the power controlling state of the energy management apparatus 20 or the prediction of the chronological change in the power controlling state by the energy management apparatus 20 based on the information retrieved from the external server may be displayed.

The icon (5) showing the state of cumulative power illustrated in FIG. 5 indicates that cumulative power sold up to the current time is 99 kWh and cumulative power purchased up to the current time is also 99 kWh. A starting point for accumulating such values may be set to any given time such as the beginning of a month. In FIG. 5, upon detection of an input operation by the user to select the icon (5), the control unit 16 obtains information through the communication with the energy management apparatus 20 and controls to display detailed information associated with the state of the cumulative power as illustrated in FIG. 10, for example. That is, when the user's finger or the like touches the icon (5) showing the cumulative power, the display unit 12, as illustrated in FIG. 10, displays history information as the detailed information associated with the state of the cumulative power.

FIG. 10 illustrates an example displaying, as the detailed information associated with the state of the cumulative power, history information about selling and purchasing power by the power control system according to the present embodiment. Preferably, a graph showing the history information about selling and purchasing power, based on the input operations similar to those to the graph described with reference to FIG. 6, carries out corresponding operations.

The icon (6) showing the DR mode illustrated in FIG. 5 shows information about the demand response (DR information: Demand Response information) from the power company and the like, and "Normal" in the figure means that there is no request from the power system that each household reduce the power consumption. In the icon (6), "DR20%" means that there is a request from the power system that each household reduce the power consumption by 20%. In the icon (6), also, "DR50%" means that there is a request from the power system that each household reduce the power consumption by 50%. Also, "Emergency" means that, due to an emergency state of the power supply from the power system, there is a request that each household run a self-supporting operation if possible and also sell power if there is any available. Further, "Isolated" means that there is a request that each household run the self-supporting operation. In the example illustrated in FIG. 5, the DR mode is "Normal", thereby the user may understand, at a glance, that there is no abnormality in a power supply state of the power system.

According to the present embodiment, when the DR mode is not "Normal" as described above and there is the request that each household reduce the power consumption and the like, the energy management apparatus 20 may carry out a variety of controls such as reduction of the power consumption by the loading apparatuses 80-1 to 80-N in response to the request. That is, when the DR mode is "Emergency" and there is the request to sell the power if there is available power, the energy management apparatus 20, in response to the request, controls to sell at least a part of the power generated by the solar power generation system 50, for example, to the power system. Also, when the DR mode is "Isolated" and there is the request that each household carry out self-supporting operation, the energy management apparatus 20, in response to the request, controls to carry out the self-supporting operation using at least one of the power generated by the solar power generation system 50 and the power discharged from the storage unit 60. As described above, at the time of a change in the power controlling state of the energy management apparatus 20, the control unit 16 obtains information after the change from the energy management apparatus 20 and controls the display unit 12 to display the information in the predetermined display mode based on the application software.

Upon detection of an input operation by the user to select the icon (7) depicting the power system illustrated in FIG. 5, the control unit 16 may control to display information such as notification from the power system and information associated with the power system such as an electricity charge of the last few months.

Upon detection of an input operation by the user to select the icon (8) depicting the button for shifting to the main panel illustrated in FIG. 5, the control unit 16 controls to display the main panel as illustrated in FIG. 4A, for example.

Upon detection of an input operation by the user to select the icon (9) depicting the return button illustrated in FIG. 5, the control unit 16 controls to display a panel that has been displayed immediately before the panel currently displayed in the display unit 12. Preferably, in each panel after the one in FIG. 6, the icon (9) depicting the return button illustrated in FIG. 5 is displayed in each of the panels being displayed so as to allow for returning to a previous panel.

Next, an example of the panel displayed in the display unit 12 upon detection of an input operation by the user to select the icon (3) depicting the house in FIG. 4A will be described.

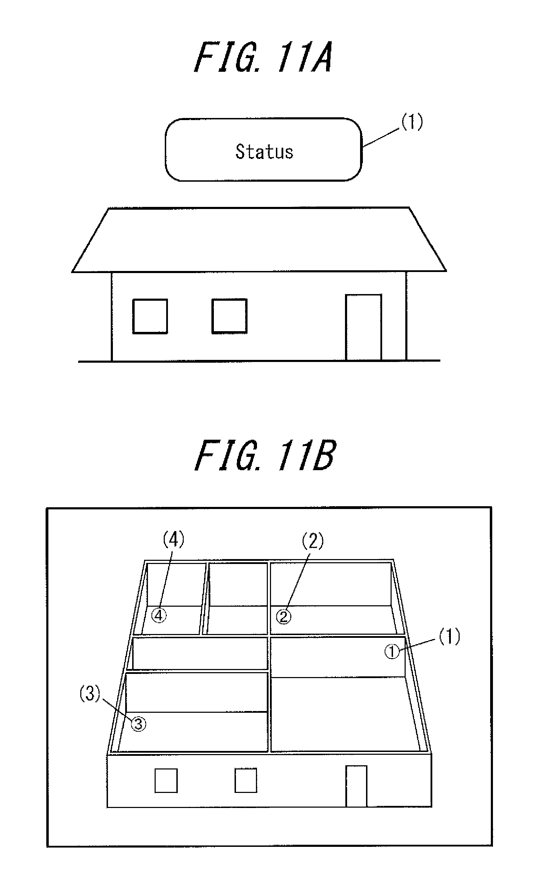

First, as described with reference to FIG. 4A, in the vicinity of the icon displayed at the center of the panel in the display unit 12, the indication of the type of information to be displayed based on an input to the icon may be displayed. Accordingly, in FIG. 4A, for example, upon detection of an input operation by the user to drag the icon (3) depicting the house to the center of the panel, the control unit 16 controls to display an indication that information about "Status" will be displayed as illustrated in FIG 11A in response to selection of the icon. Here, the "Status" means each state of the loading apparatuses 80-1 to 80-N installed inside or outside the house employing the power control system according to the present embodiment.

When the input detection unit 14, in a display as illustrated in FIG. 11A, detects an input operation corresponding to the icon depicting the house, for example, the control unit 16 controls to display allowing the user to select a loading apparatus to display information about a state thereof. That is, for example, when the user's finger or the like touches the icon depicting the house illustrated in FIG. 11A, the display unit 12, as illustrated in FIG. 11B, schematically displays a floor plan of the house employing the power control system according to the present embodiment. Also, for example, when the user's finger or the like touches the object of "Status" illustrated in FIG. 11A, the display illustrated in FIG. 11B may be displayed.

As illustrated in FIG. 11B, a display of the floor plan of the house employing the power control system according to the present embodiment is used to show positions where the loading apparatuses 80-1 to 80-N are placed inside or outside the house. That is, in the display of the floor plan illustrated in FIG. 11B, each of positions denoted by (1), (2), (3), and (4) shows where either one of the loading apparatuses 80-1 to 80-N is disposed. Although in FIG. 11B, for simplification of the figure, the numbers of the positions alone where the loading apparatuses 80-1 to 80-N are placed are shown, an icon indicative of a type of an actual loading apparatus disposed at each position may be displayed. For example, in FIG. 11B, an icon depicting a TV set may be displayed at a position where the TV set is placed.

The following is a description of the information about the power controlling state of the energy management apparatus 20 associated with a display of the number provided to each of the positions where the loading apparatuses are placed in FIG. 11B.

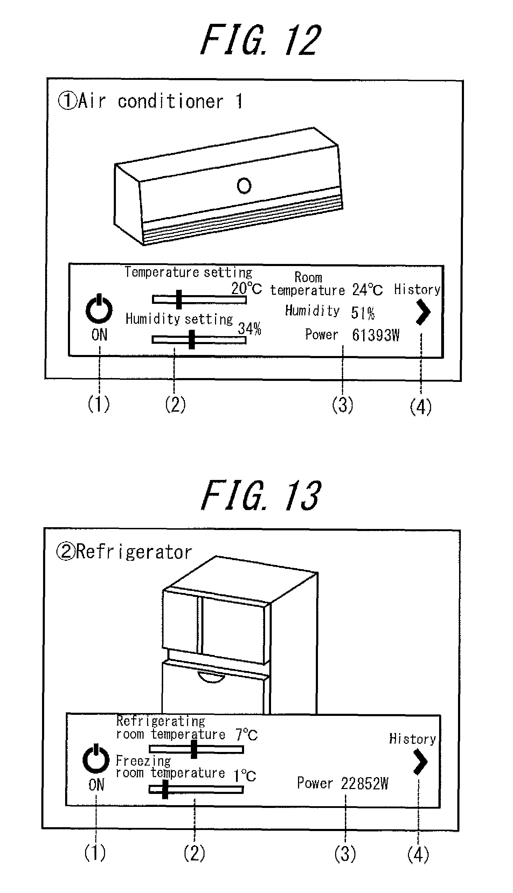

For example, when a first air conditioner is placed at the position denoted by (1) in FIG. 11B and the input detection unit 14 detects an input operation corresponding to the position, the control unit 16 obtains information about a state of the air conditioner from the energy management apparatus 20 and controls to display the information. That is, upon detection of an input operation by the user to select the position denoted by (1) illustrated in FIG. 11B, the control unit 16 obtains information through the communication with the energy management apparatus 20 and controls the display unit 12 to display detailed information associated with an air conditioner 1 as illustrated in FIG. 12, for example. For example, when the user's finger or the like touches the position denoted by (1) illustrated in FIG. 11B, the display unit 12, as illustrated in FIG. 12, displays various detailed information associated with the air conditioner 1.

The detailed information associated with the air conditioner 1 illustrated in FIG. 12 shows each state of the air conditioner 1, as follows. That is, an indication of power on (1) shows that the power of the air conditioner 1 is turned on. An indication of temperature and humidity setting (2) shows that the air conditioner 1 is set to the temperature of 20 degrees and the humidity of 34%. An indication of room temperature, humidity and power (3) shows that actual temperature and humidity measured by the air conditioner 1 is 24 degrees and 51 %, respectively, and also that current power consumption by the air conditioner 1 is 61393 W. As for a history icon (4), when the input detection unit 14 detects an input operation corresponding to this icon, the control unit 16 obtains history information about a transition of the power consumption and the like by the air conditioner 1 from the energy management apparatus 20 and controls to display the history information.

When a refrigerator, for example, is placed at a position denoted by (2) illustrated in FIG. 11B and the input detection unit 14 detects an input operation corresponding to the position, the control unit 16 obtains information about a state of the refrigerator from the energy management apparatus 20 and controls to display the information. That is, upon detection of an input operation by the user to select the position denoted by (2) illustrated in FIG. 11B, the control unit 16 obtains the information through the communication with the energy management apparatus 20 and controls the display unit 12 to display detailed information associated with the refrigerator as illustrated in FIG. 13, for example. For example, when the user's finger or the like touches the position denoted by (2) illustrated in FIG. 11B, the display unit 12, as illustrated in FIG. 13, displays various detailed information associated with the refrigerator.

The detailed information associated with the refrigerator illustrated in FIG. 13 shows each state of the refrigerator, as follows. That is, an indication of power on (1) shows that the power of the refrigerator is turned on. An indication of temperatures in a refrigerating room and a freezing room (2) show that the measured temperature is 7 degrees in the refrigerating room and 1 degree in the freezing room. An indication of power (3) shows that current power consumption by the refrigerator is at 22852 W. As for a history icon (4), when the input detection unit 14 detects an input operation corresponding to this icon, the control unit 16 obtains history information about a transition of the power consumption and the like by the refrigerator from the energy management apparatus 20 and controls to display the history information.

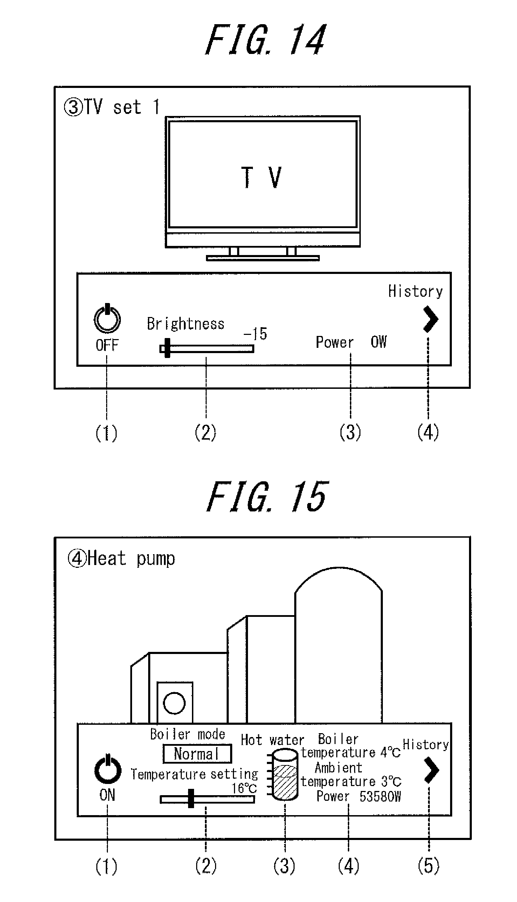

For example, when a first TV set is placed at a position denoted by (3) illustrated in FIG. 11B and the input detection unit 14 detects an input operation corresponding to the position, the control unit 16 obtains information about a state of the TV set from the energy management apparatus 20 and controls to display the information. That is, upon detection of an input operation by the user to select the position denoted by (3) illustrated in FIG. 11B, the control unit 16 obtains information through the communication with the energy management apparatus 20 and controls the display unit 12 to display detailed information associated with a TV set 1 as illustrate in FIG. 14, for example. For example, when the user's finger or the like touches the position denoted by (3) illustrated in FIG. 11B, the display unit 12, as illustrated in FIG. 14, displays various detailed information associated with the TV set 1.

The detailed information associated with the TV set 1 illustrated in FIG. 14 shows each state of the TV set 1, as follows. That is, an indication of power off (1) shows that the power of the TV set 1 is turned off. An indication of brightness of a screen of the TV set 1 (2) shows that, for example, brightness of the TV 1 with backlight and the like is set to -15. An indication of power (3) shows that current power consumption by the TV set 1 is 0 W. As for a history icon (4), when the input detection unit 14 detects an input operation corresponding to this icon, the control unit 16 obtains history information about a transition of the power consumption and the like by the TV set 1 from the energy management apparatus 20 and controls to display the history information.

When the heat pump, for example, is placed at a position denoted by (4) illustrated in FIG. 11B and the input detection unit 14 detects an input operation corresponding to the position, the control unit 16 obtains information about the state of the heat pump from the energy management apparatus 20 and controls to display the information. That is, upon detection of an input operation by the user to select the position denoted by (4) illustrated in FIG. 11B, the control unit 16 obtains information through the communication with the energy management apparatus 20 and controls the display unit 12 to display detailed information associated with the heat pump as illustrated in FIG. 15, for example. For example, when the user's finger or the like touches the position denoted by (4) illustrated in FIG. 11B, the display unit 12, as illustrated in FIG. 15, displays various detailed information associated with the heat pump.

The detailed information associated with the heat pump illustrated in FIG. 15 shows each state of the heat pump, as follows. That is, an indication of power on (1) shows that the power of the heat pump is turned on. An indication of a boiler mode and temperature setting (2) shows that an operation mode set to the boiler is a normal mode and the temperature set to the boiler is 16 degrees. An indication of hot water (3) may show an amount of the hot water of the boiler in 5 levels, for example. An indication of boiler temperature, ambient temperature and the power (4) shows that actual temperature measured in the boiler is 4 degrees, the temperature measured around the boiler is 3 degrees, and the current power consumption by the heat pump is 53580 W. As for a history icon (5), when the input detection unit 14 detects an input operation corresponding to this icon, the control unit 16 obtains history information about a transition of the power consumption and the like by the heat pump from the energy management apparatus 20 and controls to display the history information.

Next, examples of a panel displayed in the display unit 12 upon detection of, in the display illustrated in FIG. 4A, an input operation by the user to select the icon (5) depicting the calendar illustrated in FIG. 4B will be described.

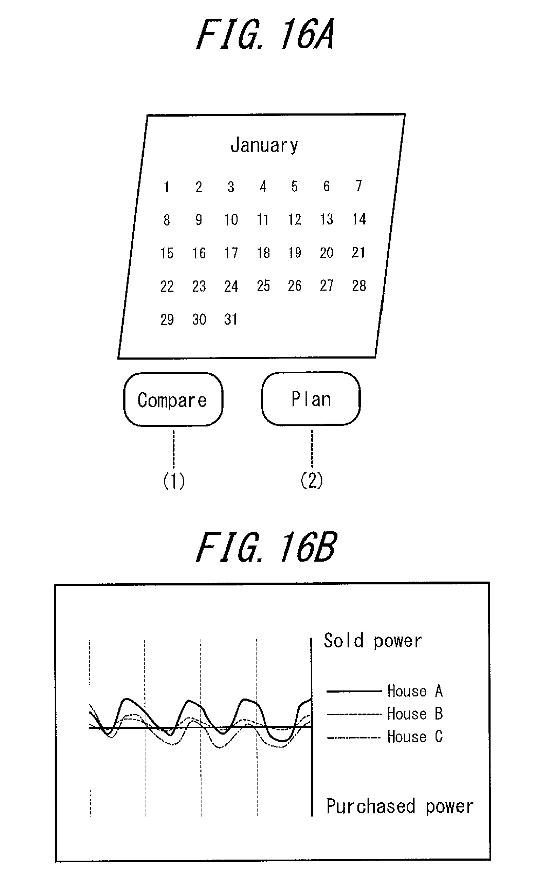

First, as described with reference to FIG. 4A, in the vicinity of the icon displayed at the center of the display unit 12, the indication of the type of information to be displayed based on an input to the icon may be displayed. For example, in the panel as illustrated in FIG. 4A, upon detection of an input operation by the user to drag the icon (5) illustrated in FIG. 4B to the center of the panel, the control unit 16 controls to display, as illustrated in FIG. 16A, an object "Compare" (1) and an object "Plan" (2) in the vicinity of the icon (5). In this way, one icon may indicate display of information about two or more power controlling states of the energy management apparatus 20.

Here, when the user's finger or the like, for example, touches the object "Compare" (1), a display as illustrated in FIG. 16B may be displayed. FIG. 16B illustrates a state comparing a power-selling state and a power-purchasing state of the house described in the present example with those of other houses. For example, a line of "House A" indicates the power-selling state and the power-purchasing state of the house described in the present example, and lines of "House B" and "House C" indicate those of the "House B" and the "House C". Here, in selection of other houses for the comparison, in consideration of privacy issues and the like, other houses having the loading apparatuses and power consumption similar to those of the house described in the present example are preferably selected as anonymous households.

As already described with reference to FIG. 1, in the power control system according to the present embodiment, the energy management apparatus 20 is connected to the network 300. Therefore, the system EMS 200 installed in the power company, for example, may collect a variety of information stored in the database 22 of the energy management apparatus 20 of each household. According to the present embodiment, accordingly, the system EMS 200 appropriately selects the information of each household and provides it as information of the anonymous household to another household, thereby allowing for the comparison of the power-selling state and the power-purchasing state as described above.

On the other hand, when the user's finger or the like, for example, touches the object "Plan" (2) illustrated in FIG. 16A, a submenu associated with the "Plan", for example, may be displayed. A "Submenu" may include, for example, "Display of Planned Operation", "Loading Pattern", and "Electrical Charge Signal".

Here, the "Display of Planned Operation" is used to display operation plans of the solar power generation system 50 and the storage unit 60, for example. When proceeding to a panel of the "Display of Planned Operation", a predicted future operation plan based on operation history or a preset future operation plan may be displayed, for example. Also, the "Loading Pattern" is used to display loading patterns of the loading apparatuses 80-1 to 80-N, for example. When proceeding to a panel of the "Loading Pattern", a predicted future loading pattern and the like based on loading pattern history and the like may be displayed, for example. Further, the "Electrical Charge Signal" is used to display information based on the electrical charge signal. When proceeding to a panel of the "Electrical Charge Signal", a predicted further electricity charge signal based on a past transition of the electrical charge signal may be displayed. Alternatively, the energy management apparatus 20 may obtain information about predicted electrical charge provided by the professional vendor from the external server and the like so as to display such information.

As other examples, when the user's finger or the like touches the icon depicting the sun (1) illustrated in FIG. 4B, a submenu associated with "Weather" and "Weather-Related Power" may be displayed. Here, the "Weather" is used to display information about a weather forecast and, when proceeding to a panel of the "Weather", information about, for example, the weather, the temperature and the humidity may be displayed by appropriately using graphics. The energy management apparatus 20 may obtain, as such information about the weather to be displayed, information about a weather forecast provided by the professional vendor through the network at a predetermined timing. Also, as the "Weather-Related Power" is used to display, for example, a solar radiation amount and outside temperature together with weather-related information. When proceeding to a panel of the "Weather-Related Power", information about current intensity of the solar radiation and temperature, together with the power generation state of the solar power generation system 50 and the charging state of the storage unit 60, may be displayed by appropriately using the graphics. The energy management apparatus 20 may obtain, also as the information associated with the weather, information provided by the professional vendor through the network at a predetermined timing to be displayed.

Also, when the user's finger or the like, for example, touches the icon (4) depicting the reel of the magnetic tape illustrated in FIG. 4B, a "History" of each information stored in (the database 22 of) the energy management apparatus 20 may be displayed, for example. For example, when the user's finger or the like touches the icon (4) depicting the reel of the magnetic tape illustrated in FIG. 4B, the display may proceed to the display of the floor plan as illustrated in FIG. 11B. The display of the floor plan described with reference to FIG. 11B shows positions where the loading apparatuses 80-1 to 80-N are placed. Here, for example, when the icon (4) depicting the reel of the magnetic tape illustrated in FIG. 4B is selected and the display shifts to the display illustrated in FIG. 11B, upon detection of an input corresponding to the position of each of the loading apparatuses 80, a history of the power consumption by each of the loading apparatus 80 placed at the position may be displayed. Such history of the power consumption by the loading apparatus 80 may be stored in the database 22 of the energy management apparatus 20. Preferably, the history of the power consumption by the loading apparatus 80 is shown by a graph, for example, so as to allow the user to easily understand the history at a glance. Alternatively, when the icon (4) depicting the reel of the magnetic tape illustrated in FIG. 4B is selected, a predetermined icon or object may be displayed such that, upon detection of an input corresponding thereto, history of an item corresponding to the display on which the input is detected may be displayed.

In this way, according to the display terminal 10 of the present embodiment, an ordinary user who is not a professional in power control may easily understand the power controlling state of the power control system at a glance.

Although the present invention has been described based on the figures and the embodiment, it is to be understood that various modifications and changes may be implemented based on the present disclosure by those who are ordinarily skilled in the art. Accordingly, such modifications and changes are included in a scope of the present invention. For example, functions and the like included in each unit, each means and each step may be rearranged without logical inconsistency, so as to combine a plurality of means or steps together or to divide them.

In the above embodiment, the description focuses on an example where the touch panel is used as the input detection unit 14. As described above, however, in the present invention the input detection unit for detecting an input corresponding to a display of the display unit is not limited to the touch panel but may be constituted by using, for example, direction keys indicating upward, downward, the left side, and the right side. According to the present invention, as long as being capable of determining a moving direction indicated by the input detected by the input detection unit, a variety of input detection unit including the touch panel for detecting the input operation such as sweeping and dragging as the one used in the above embodiment and the direction keys for detecting an input operation to upward, downward, the left side, and the right side may be employed.

Further, the displays in the display unit 12 described in the above embodiment are used by way of example only and, in addition to the examples described above, a variety of displays that allow the ordinary user to easily understand the power controlling state of the power control system at a glance are conceivable. Also, a variety of application software used for displaying the information about the power controlling state described above in the display manner that allows the ordinary user to easily understand at a glance are conceivable.

### REFERENCE SIGNS LIST

- 10: display terminal
- 12: display unit
- 14: input detection unit
- 16: control unit
- 18: interface
- 20: energy management apparatus
- 22: database
- 30: smart meter
- 40: power conditioner
- 50: solar power generation system
- 60: power storage unit
- 70: panel board
- 80: loading apparatus
- 100: commercial power supply
- 200: system EMS
- 210: database
- 300: network

## Claims

1. A display terminal for displaying information about a power controlling state of an energy management apparatus capable of communicating with a power conditioner connected to at least one of a power generation system and a power storage system, a connection device connected to the power conditioner and a commercial power supply, and a loading apparatus for receiving power via the power conditioner, the display terminal comprising:
a display unit;
an input detection unit for detecting an input corresponding to a display of the display unit; and
a control unit, when the input detection unit detects the input corresponding to the display of the display unit, for obtaining information about the power controlling state of the energy management apparatus associated with the display from the energy management apparatus and controlling the display unit to display the information about the power controlling state in a predetermined display mode.

2. The display terminal according to claim 1, wherein, when an image representing the connection device is displayed on the display unit and, simultaneously, the input detection unit detects an input corresponding to a display of the image representing the connection device,
the control unit obtains, as the information about the power controlling state of the energy management apparatus associated with the image representing the connection device, at least one of information about power purchased from the commercial power supply and power sold to the commercial power supply and information about an electrical charge and controlling the display unit to display the information in the predetermined display mode.

3. The display terminal according to claim 1 or 2, wherein the control unit, in displaying a transition of the power controlling state of the energy management apparatus in a chronological order, controls the display unit to display information up until the present time based on a history of the transition of the power controlling state and information after the present time based on a prediction made by the energy management apparatus on the basis of the history or based on a prediction of the transition of the power controlling state obtained from an external server.

4. The display terminal according to any one of claims 1 to 3, wherein the control unit, in displaying the transition of the power controlling state of the energy management apparatus in the chronological order, obtains information about the transition of the power controlling state of the energy management apparatus for a predetermined period from the energy management apparatus and controls the display unit to display the information in the predetermined display mode.

5. The display terminal according to any one of claims 1 to 4, wherein, when the input detection unit, while the transition of the power controlling state of the energy management apparatus is displayed in the chronological order in the display unit, detects an input indicating a shift in a chronological direction corresponding to the display of the transition in the chronological order,
the control unit, based on a shifting direction indicated by the input detected by the input detection unit, obtains information about the transition of the power controlling state of the energy management apparatus from the energy management apparatus and controls the display unit to display the information in the predetermined display mode following the shift of the input detected by the input detection unit.

6. The display terminal according to any one of claims 1 to 5, wherein the control unit, in displaying information about power generation by the power generation system as the information about the power controlling state of the energy management apparatus, controls the display unit to display an amount of generated power represented by a rotational speed or a rotational direction of a predetermined object.

7. The display terminal according to any one of claims 1 to 6, wherein the control unit, in displaying information about charge or discharge of the power storage system as the information about the power controlling state of the energy management apparatus, controls the display unit to display an animation of a predetermined object that expands outward indicating a discharging state or an animation of the predetermined object that contracts inward indicating a charging state.

8. The display terminal according to any one of claims 1 to 7, wherein, when the input detection unit, while the display unit displays an image representing the loading apparatus, detects an input corresponding to a display of the image representing the loading apparatus,
the control unit obtains information about the power controlling state of the energy management apparatus associated with the image representing the loading apparatus from the energy management apparatus and controls the display unit to display the information about the power controlling state in the predetermined display mode.

9. The display terminal according to any one of claims 1 to 8, wherein the control unit obtains, as the information about the power controlling state of the energy management apparatus, information about a demand response for power supplied from the commercial power supply or information about a purchasing price of the power from the energy management apparatus and controls the display unit to display the information about the power controlling state in the predetermined display mode.

10. The display terminal according to any one of claims 1 to 9, wherein, when the power controlling state of the energy management apparatus is changed based on the information about the demand response for the power supplied from the commercial power supply,
the control unit obtains information about a state after the change of the power controlling state of the energy management apparatus from the energy management apparatus and controls the display unit to display the information about the state in the predetermined display mode.

11. The display terminal according to claim 10, wherein, when the power controlling state of the energy management apparatus is changed to a state selling the power generated by the power generation system to the commercial power supply based on information, as the information about the demand response, that the power supply from the commercial power supply is in an emergency state,
the control unit obtains information about a state after the change of the power controlling state of the energy management apparatus from the energy management apparatus and controls the display unit to display the information about the state in the predetermined display mode.

12. The display terminal according to claim 10 or 11, wherein, when the power controlling state of the energy management apparatus is changed to a self-supporting operation by using at least one of power from the power generation system and power from the power storage system based on information, as the information about the demand response, that instructs the self-supporting operation by using at least one of the power from the power generation system and the power from the power storage system,
the control unit obtains information about a state after the change of the power controlling state of the energy management apparatus from the energy management apparatus and controls the display unit to display the information about the state in the predetermined display mode.

13. A power control system including a power conditioner connected to at least one of a power generation system and a power storage system and connected also to a loading apparatus, a connection device connected to the power conditioner and a commercial power supply, an energy management apparatus capable of communicating with the power conditioner, the connection device and the loading apparatus, and a display terminal for communicating with the energy management apparatus, wherein
the display terminal comprising:
a display unit for displaying information about a power controlling state of the energy management apparatus;
an input detection unit for detecting an input corresponding to a display of the display unit; and
a control unit, when the input detection unit detects the input corresponding to the display of the display unit, for obtaining information about the power controlling state of the energy management apparatus associated with the display from the energy management apparatus and controlling the display unit to display the information about the power controlling state in a predetermined display mode.

14. A display method of a display terminal including a display unit, for communicating with an energy management apparatus capable of communicating with a power conditioner connected to at least one of a power generation system and a power storage system, a connection device connected to the power conditioner and a commercial power supply, and a loading apparatus for receiving power via the power conditioner, the display method comprising:
a display step of displaying information about a power controlling state of the energy management apparatus on the display unit;
an input detection step of detecting an input corresponding to a display of the display unit; and
a control step of, when the input corresponding to the display of the display unit is detected at the input detection step, obtaining information about the power controlling state of the energy management apparatus associated with the display from the energy management apparatus and controlling the display unit to display the information about the power controlling state in a predetermined display mode.
